# FASCICULE DE BREVET EUROPEEN

(11) **EP 3 836 102 B1**
(45) Date de publication et mention de la délivrance du brevet: **07.09.2022**
(21) Numéro de dépôt: 20206145.3
(22) Date de dépôt: 06.11.2020
(51) Int. Cl.: G08B 13/16, H04W 12/037, H04W 12/106, H04W 12/108, G08B 13/24, G08B 13/04, G08B 29/04, H04L 9/06, G01S 13/48, H04L 9/08, H04L 9/32

(54) **BARRIERE HYPERFREQUENCE SECURISEE**
SICHERE MIKROWELLENSCHRANKE
SECURE MICROWAVE BARRIER

(30) Priorité: 10.12.2019 FR 1914076
(43) Date de publication de la demande: 16.06.2021
(73) Titulaire: Eryma SAS, 92130 Issy les Moulineaux (FR)
(72) Inventeur: JUTEL, Dominique, 29300 QUIMPERLE (FR)
(74) Mandataire: Novagraaf Technologies

(56) Documents cités:
- US-A- 5 912 973
- US-A1- 2010 201 561
- Anonymous: "Microwave Perimeter Security 2 permission in writing from Fiber SenSys", , 1 janvier 2013 (2013-01-01), XP055709779, Extrait de l'Internet: URL:https://fibersensys.com/product-inform ation/download-file?path=A+and+E+Documents %2FApplication+Notes+-+PDF%2FAN-SM-011+Mic rowave+Perimeter+Security+Application+Note +-+Rev+A.+6-12.pdf [extrait le 2020-06-29]
- Morris Dworkin: "NIST Special Publication 800-38D Recommendation for Block Cipher Modes of Operation: Galois/Counter Mode (GCM) and GMAC", , 1 novembre 2007 (2007-11-01), XP055537161, Extrait de l'Internet: URL:https://nvlpubs.nist.gov/nistpubs/Lega cy/SP/nistspecialpublication800-38d.pdf

## Description

### DOMAINE TECHNIQUE

Ce document concerne les barrières hyperfréquences et la sécurisation des barrières hyperfréquences.

### ETAT DE LA TECHNIQUE

Une barrière hyperfréquence correspond à un faisceau hyperfréquence formé par au moins un dispositif émetteur et détecté par au moins un dispositif récepteur. Une barrière hyperfréquence peut être utilisée pour la détection d'intrusion : tout objet entrant dans le faisceau hyperfréquence perturbe ce faisceau hyperfréquence et peut ainsi être détecté.

Il y a plusieurs limites principales à la sécurité de fonctionnement des barrières hyperfréquence.

Une première limite consiste en ce qu'un dispositif émetteur peut, avec les précautions nécessaires, être cloné par un second dispositif émetteur ou émetteur « pirate ». Ce second dispositif émetteur, disposé de manière judicieuse, remplace le premier dispositif émetteur qui peut alors être désactivé. On peut par exemple au moyen du dispositif émetteur « pirate » produire un faisceau hyperfréquence limité dans l'espace de sorte à réduire de manière conséquente le volume initial de l'espace couvert par le faisceau hyperfréquence et faire en sorte qu'une partie seulement de ce volume initial soit couvert pour la surveillance et la détection d'intrus.

Une deuxième limite consiste en ce qu'une personne malveillante peut intervenir à l'intérieur du dispositif émetteur pour le rendre inopérant. Actuellement, la surveillance d'ouverture du boîtier de l'émetteur est réalisée par un contact de « sabotage ». En cas d'ouverture du boîtier, une information d'ouverture est transmise à un dispositif de supervision par une liaison indépendante du faisceau hyperfréquence, par exemple via un câble ou un autre moyen de communication sans fil entre l'émetteur et le dispositif de supervision, ce qui implique un coût additionnel ainsi qu'une consommation d'énergie additionnelle.

Il apparaît ainsi un besoin d'améliorer la situation et de résoudre tout ou partie des inconvénients précités.

Le document brevet US 2010/0201561 A1 décrit un exemple de système de détection d'intrusion permettant de contrôler l'entrée et la sortie d'une zone surveillée ainsi que la localisation précise d'une intrusion. Le système inclut une pluralité de capteurs électromagnétiques autonomes, placés sur le périmètre de la zone surveillée et disposés de manière à ce que la zone de l'espace couvert par chaque capteur chevauche partiellement la zone de l'espace couvert par les capteurs adjacents.

### RESUME

La présente description concerne, selon un premier aspect, un dispositif émetteur selon la revendication 1.

Une trame de données chiffrée unique à chaque émission est obtenue par application d'un algorithme de chiffrement utilisant un nonce pour le chiffrement et intégrant ce nonce dans le message transmis. Par définition, un nonce est un nombre arbitraire unique, pouvant être aléatoire, destiné à être utilisé une seule fois. Selon le type de chiffrement envisagé (AES CCM ou GCM), le nonce peut intégrer un compteur de messages. Ainsi chaque trame de données est unique. Dans un ou plusieurs modes de réalisation du dispositif émetteur, le chiffrement utilise un algorithme de chiffrement Advanced Encryption Standard, AES, en mode « Counter with CBC-MAC », CCM, ou « Galois/Counter Mode », GCM. Un tel algorithme utilise un nonce intégrant un compteur de messages.

Dans un ou plusieurs modes de réalisation du dispositif émetteur, le circuit de chiffrement est doté d'un dispositif anti-effraction physique.

Dans un ou plusieurs modes de réalisation du dispositif émetteur, l'information d'état du dispositif émetteur comprend une information d'état effraction et/ou une information d'état de défaut technique.

La présente description concerne, selon un deuxième aspect, un dispositif récepteur selon la revendication 5.

Dans un ou plusieurs modes de réalisation du dispositif récepteur, le déchiffrement utilise un algorithme de déchiffrement Advanced Encryption Standard, AES, en mode « Counter with CBC-MAC », CCM, ou « Galois/Counter Mode », GCM. Un tel algorithme utilise un nonce intégrant un compteur de messages.

Dans un ou plusieurs modes de réalisation du dispositif récepteur, le circuit de déchiffrement est doté d'un dispositif anti-effraction physique.

La présente description concerne, selon un troisième aspect, un procédé selon la revendication 8.

Dans un ou plusieurs modes de réalisation, le dispositif émetteur selon le premier aspect comprend des moyens de mise en œuvre du procédé selon le troisième aspect.

La présente description concerne, selon un quatrième aspect, un procédé selon la revendication 9.

Dans un ou plusieurs modes de réalisation, le dispositif récepteur selon le deuxième aspect comprend des moyens de mise en œuvre du procédé selon le quatrième aspect.

### BREVE DESCRIPTION DES FIGURES

D'autres avantages et particularités résulteront de la description qui va suivre, donnée à titre d'exemple non limitatif et faite en référence aux figures annexées dans lesquelles :
[fig. 1a] représente de manière schématique une barrière hyperfréquence selon une vue de profil;
[fig. 1b] représente de manière schématique une barrière hyperfréquence selon une vue de dessus;
[fig. 2a] représente de manière schématique un dispositif émetteur pour la mise en œuvre d'une barrière hyperfréquence;
[fig. 2b] représente de manière schématique un dispositif récepteur pour la mise en œuvre d'une barrière hyperfréquence;
[fig. 3] représente de manière schématique le traitement effectué sur une trame de données à transmettre d'un dispositif émetteur vers un dispositif récepteur.
[fig. 4] représente de manière schématique un organigramme d'un procédé de mise en œuvre d'une barrière hyperfréquence par un dispositif émetteur.
[fig. 5] représente de manière schématique un organigramme d'un procédé de mise en œuvre d'une barrière hyperfréquence par un dispositif récepteur.

### DESCRIPTION DETAILLEE

Une barrière hyperfréquence correspond à un faisceau hyperfréquence formé par au moins un émetteur et détecté par au moins un récepteur.

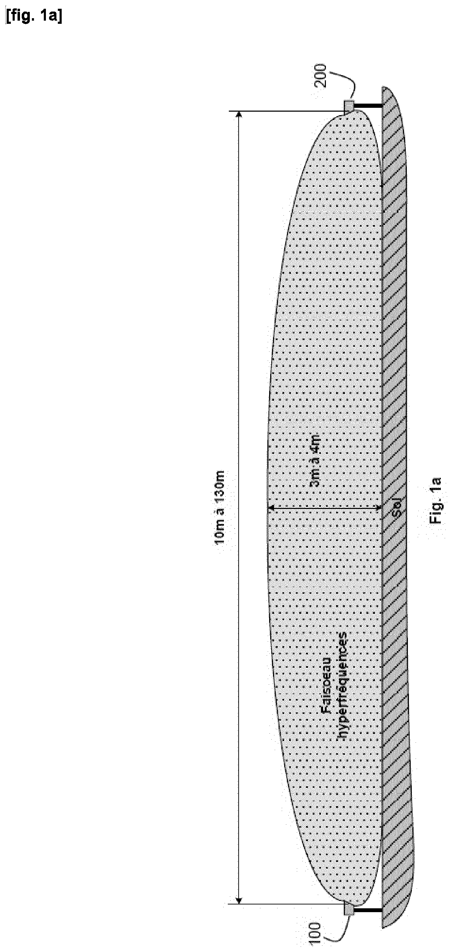

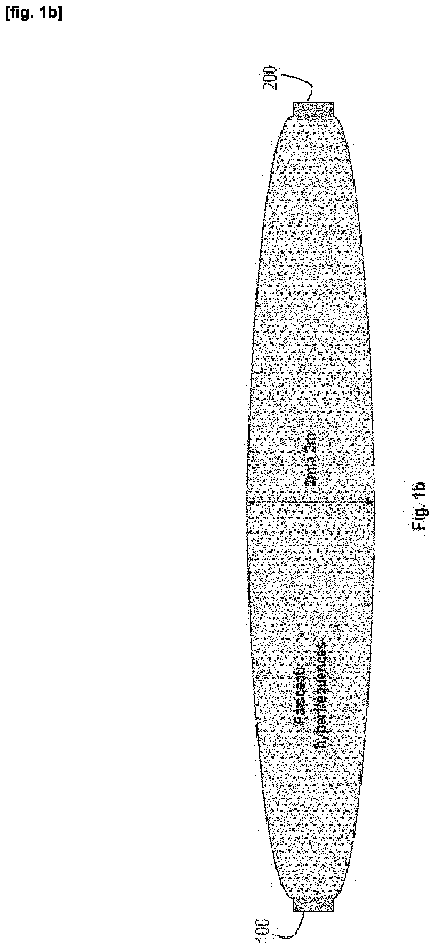

Le faisceau hyperfréquence a par exemple la forme d'un ballon de rugby. La fig. 1a représente une vue en coupe horizontale d'un exemple de lobe hyperfréquence, tandis que la fig. 1b représente une vue en coupe horizontale de ce même lobe hyperfréquence.

Pour une paire constituée d'un émetteur et d'un récepteur, une barrière hyperfréquence permet la mise en œuvre d'une surveillance dans un volume de détection correspondant au volume qui est à la fois couvert par le faisceau hyperfréquence produit par l'émetteur et détectable par le détecteur. Le volume de détection correspond ainsi à l'intersection du lobe d'émission et du lobe de réception.

Une barrière hyperfréquence permet de surveiller un volume dans un espace entre le dispositif émetteur et un dispositif récepteur, réglés sur une même porteuse hyperfréquence (par exemple, 9900 MHz +/- 10 MHz). Tout intrus présent dans le faisceau hyperfréquence cause une modulation en amplitude du lobe hyperfréquence qui peut être détectée par le dispositif récepteur.

La présente description concerne des dispositifs et procédés permettant une authentification par un dispositif récepteur du dispositif émetteur et un contrôle d'intégrité à la fois des données transmises par le dispositif émetteur et du faisceau hyperfréquence. Il est ainsi possible de détecter un éventuel clonage du dispositif émetteur. Ces dispositifs et procédés assurent également la confidentialité des données transmises et une protection « anti-rejeux » des trames chiffrées.

En outre, il est possible de transmettre au dispositif récepteur, via le faisceau hyperfréquence, des informations d'état du dispositif émetteur. Aucun lien de communication indépendant du faisceau hyperfréquence (câblage ou autre) n'est donc nécessaire.

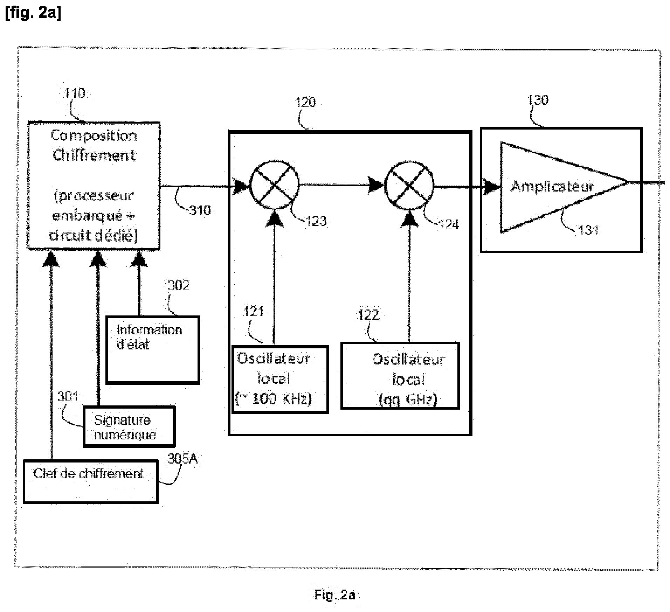

La fig. 2a représente de manière schématique un dispositif émetteur pour la mise en œuvre d'une barrière hyperfréquence;

Le dispositif émetteur (100) comprend un processeur embarqué et un circuit de chiffrement (110), un modulateur (120) et un émetteur (130). Le processeur embarqué et le circuit de chiffrement (110) peuvent faire partie d'un même circuit embarqué ou correspondre à deux circuits physiquement distincts.

Le circuit de chiffrement (110) peut être réalisé par tout type de composant matériel (hardware) (par exemple, ASIC, FPGA, etc) adapté pour mettre en œuvre les fonctions décrites dans ce document pour le circuit de chiffrement. Ce composant hardware peut être un circuit analogique et/ou numérique. Ce composant hardware peut comprendre en outre du logiciel (software) et/ou micrologiciel (firmware). Ce composant hardware peut comprendre un ou plusieurs microprocesseurs ou microcontrôleurs.

Le circuit de chiffrement (110) est configuré pour stocker une clef de chiffrement et une signature numérique du dispositif émetteur. Le circuit de chiffrement peut être doté d'un dispositif anti-effraction physique.

Le modulateur (120) peut comprendre un premier modulateur (121) et un deuxième modulateur (122), un premier multiplexeur (123) et un deuxième multiplexeur (124). Le premier modulateur (121) comprend par exemple un oscillateur de fréquence correspondant à la fréquence d'une sous-porteuse. Le deuxième modulateur (121) comprend par exemple un oscillateur de fréquence correspondant à la fréquence du signal hyperfréquence à émettre. Le premier multiplexeur (123) est configuré pour générer, en coopération avec le premier oscillateur, un premier signal modulé à la fréquence d'une sous-porteuse démodulé comprenant le message à transmettre, le deuxième multiplexeur (124) recevant ce premier signal modulé et générant, en coopération avec le deuxième oscillateur, un signal hyperfréquence modulé à émettre.

L'émetteur (130) peut comprendre un ou plusieurs amplificateurs (131) pour amplifier, avant émission, un signal hyperfréquence modulé produit par le modulateur (120).

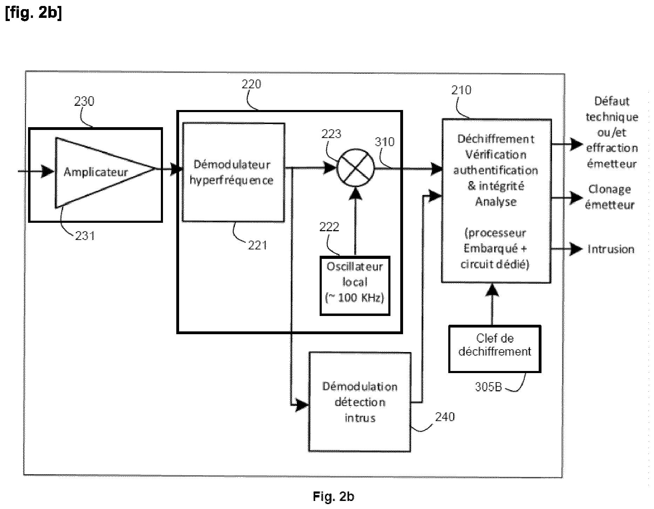

La fig. 2b représente de manière schématique un dispositif récepteur pour la mise en œuvre d'une barrière hyperfréquence;

Le dispositif récepteur (200) comprend un processeur embarqué et un circuit de déchiffrement (210), un démodulateur (220), un circuit de détection (240) et un récepteur (230). Le processeur embarqué et le circuit de déchiffrement (210) peuvent faire partie d'un même circuit embarqué ou correspondre à deux circuits physiquement distincts.

Le récepteur (230) peut comprendre un ou plusieurs amplificateurs (231) pour amplifier, après réception, un signal hyperfréquence modulé reçu.

Le démodulateur (220) peut comprendre un premier démodulateur (221), un deuxième démodulateur (222) connecté à la sortie du premier démodulateur, un multiplexeur (223) ainsi que l'ensemble des filtres nécessaires aux démodulations effectuées par les premier et deuxième démodulateurs. Le deuxième démodulateur (221) comprend par exemple un oscillateur de fréquence correspondant à la fréquence de la sous-porteuse utilisée pour transmettre un message comprenant une trame de données chiffrée. Le deuxième démodulateur (221) est configuré pour extraire le message comprenant une trame de données chiffrée. Le multiplexeur (223) est configuré pour extraire le message du signal hyperfréquence démodulé généré par le premier démodulateur (220).

Le circuit de déchiffrement (210) est configuré pour stocker une clef de chiffrement et une signature numérique du dispositif récepteur. Le circuit de déchiffrement peut être doté d'un dispositif anti-effraction physique.

Le circuit de déchiffrement (210) peut être réalisé par tout type de composant matériel (hardware) (par exemple, ASIC, FPGA, etc) adapté pour mettre en œuvre les fonctions décrites dans ce document pour le circuit de chiffrement. Ce composant hardware peut être un circuit analogique et/ou numérique. Ce composant hardware peut comprendre en outre du logiciel (software) et/ou micrologiciel (firmware). Ce composant hardware peut comprendre un ou plusieurs microprocesseurs ou microcontrôleurs.

Le circuit de démodulation (240) est configuré pour analyser un signal hyperfréquence démodulé en sortie du premier démodulateur (221) de sorte à détecter une éventuelle intrusion dans le faisceau hyperfréquence. Comme expliqué plus haut, tout intrus entrant ou présent dans le faisceau hyperfréquence cause une modulation en amplitude du faisceau hyperfréquence qui peut être détectée par le dispositif récepteur. La modulation causée par l'intrusion est analysée, par exemple après démodulation du signal hyperfréquence détecté par le dispositif récepteur. Par exemple, une comparaison à des seuils préréglés (seuils d'amplitude) est effectuée et tout dépassement d'un seuil cause la génération d'une alarme.

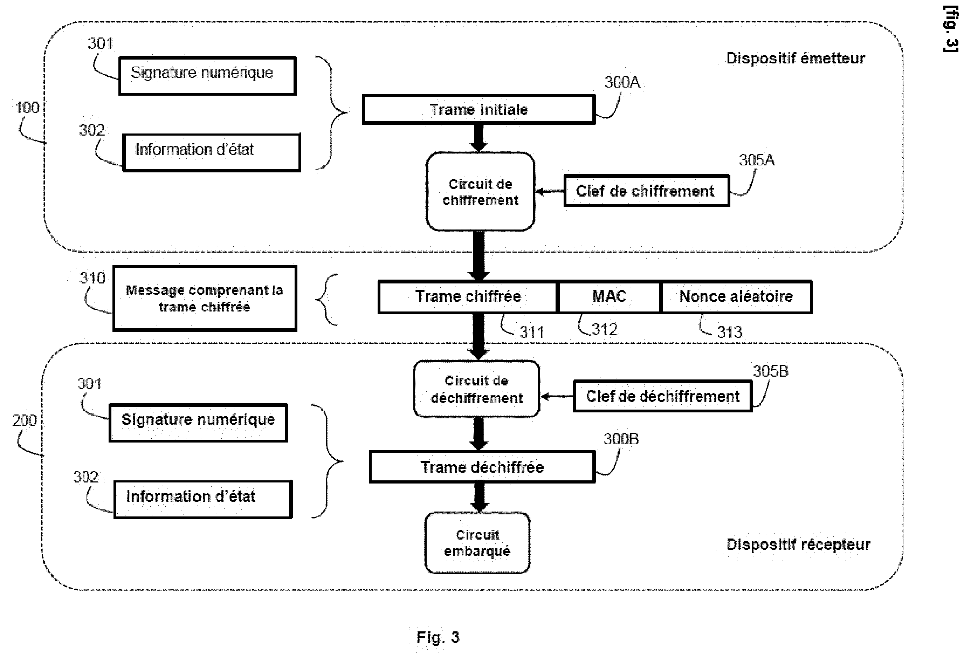

La fig. 3 illustre de manière schématique le traitement effectué sur une trame de donnée (300A) à transmettre d'un dispositif émetteur (100) vers un dispositif récepteur (200).

Une clef de chiffrement (305A) et une signature numérique (301) du dispositif émetteur sont stockées dans un circuit de chiffrement (110) du dispositif émetteur. Le circuit de chiffrement (110) du dispositif émetteur obtient en outre une information d'état (302) du dispositif émetteur.

La trame de données à transmettre (300A) est obtenue au sein du dispositif émetteur par le circuit de chiffrement (110), cette trame de données comprenant la signature numérique (301) du dispositif émetteur et/ou l'information d'état (302) du dispositif émetteur.

La signature numérique (301) du dispositif émetteur correspond par exemple à un identifiant numérique du dispositif émetteur formé par ensemble d'un ou plusieurs octets ayant des valeurs particulières. Cette signature numérique (301) est de préférence unique, propre au dispositif émetteur. La signature numérique (301) peut correspondre à un numéro de série du dispositif émetteur, du circuit de chiffrement ou d'un ou plusieurs composants hardware du dispositif émetteur. La signature numérique (301) peut être enregistrée dans le circuit de chiffrement en usine, au moment de la fabrication du dispositif émetteur ou ultérieurement, selon tout protocole adapté.

L'information d'état (302) du dispositif émetteur comprend une information d'état d'effraction et/ou une information d'état de défaut technique. L'information d'état de défaut technique indique si le dispositif émetteur est en état de défaut technique ou non. L'information d'état d'effraction indique si le boîtier du dispositif émetteur est ouvert ou fermé.

La trame de donnée à transmettre (300A) est chiffrée par le circuit de chiffrement du dispositif émetteur (100) au moyen de la clef de chiffrement (305A) stockée dans le circuit de chiffrement. Le circuit de chiffrement peut mettre en œuvre un algorithme de chiffrement asymétrique ou symétrique.

L'algorithme de chiffrement est par exemple un chiffrement AES (Advanced Encryption Standard), avec compteur, par exemple de type CCM (Counter with CBC-MAC) ou GCM (Galois/Counter Mode). Un tel algorithme obtient en entrée un nonce aléatoire unique avec compteur de messages à chaque chiffrement. Ce nonce est utilisé pour le chiffrement puis intégré dans la trame de données chiffrée afin de permettre le déchiffrement. Un tel algorithme permet d'obtenir une protection anti-rejeux. La longueur des blocs de données et/ou des clefs de chiffrement pour l'AES est par exemple de 128 bits. Tout autre algorithme, par exemple du type utilisant pour le chiffrement un nonce aléatoire unique avec compteur de messages à chaque émission, est utilisable également pour obtenir une protection anti-rejeux. La trame de donnée chiffrée sera ainsi unique à chaque émission, et ce quel que soit le contenu de la trame de donnée initiale à chiffrer.

Le mode CCM est un mode de fonctionnement pour le chiffrement par blocs. Il s'agit d'un algorithme de chiffrement avec authentification conçu pour permettre à la fois une authentification de l'émetteur et la confidentialité du message. Le mode CCM est défini pour des blocs de données de 128 bits.

Le mode GCM est un autre mode de fonctionnement possible pour le chiffrement par blocs. C'est un algorithme de chiffrement authentifié conçu pour fournir à la fois l'intégrité et l'authenticité des données transmises, ainsi que la confidentialité de ces données. Le chiffrement utilisé est basé sur un compteur (mode CTR) dans lequel la multiplication entre le compteur et la clef de 128 bits est effectuée dans un Corps de Galois.

La trame de données chiffrée (311) est transmise dans un message (310). Le message comprend en outre un code d'authentification de message (312) (MAC, Message Authentication Code) et un nonce aléatoire (313) intégrant un compteur de messages.

Le nonce aléatoire (313) avec compteur de messages est généré par le dispositif émetteur et est destiné à être utilisé une seule fois : le nonce aléatoire (313) change à chaque envoi de trame de données chiffrée (311). Le nonce aléatoire (313) avec compteur de messages permet de protéger la transmission contre les re-jeux. Les caractères aléatoire et unique de la génération du nonce aléatoire sont garantis par la construction du circuit de chiffrement et respecte les exigences de l'algorithme AES. Un générateur de nombre aléatoire respectant les exigences normatives du NIST (National Institute of Standards and Technology) est utilisé pour calculer le nonce aléatoire. Le nonce aléatoire (313) est utilisé en tant que vecteur d'initialisation (valeur initiale) de l'algorithme AES de chiffrement et permet au dispositif récepteur de déchiffrer correctement la trame de données chiffrée (311).

Le code d'authentification de message (312) (MAC) permet d'effectuer un contrôle d'intégrité et d'authentification de la trame de données déchiffrée. Le MAC est calculé lors du chiffrement (côté dispositif émetteur). C'est une donnée de sortie de l'algorithme de chiffrement comme l'est la trame chiffrée. Côté dispositif récepteur, la trame chiffrée, le nonce avec compteur de messages et le MAC sont des données d'entrée de l'algorithme déchiffrement qui, après recalcul du MAC compare le MAC reçu à celui calculé de sorte à réaliser le contrôle d'intégrité et l'authentification.

Les données de chiffrement (notamment la clef de chiffrement (305A) et la signature numérique (301)) peuvent être stockées de manière sécurisée dans le circuit de chiffrement, de sorte par exemple à ne pouvoir être lues ou extraites de ce circuit de chiffrement. Par exemple, le circuit de chiffrement intègre un dispositif anti-effraction physique. Un dispositif anti-effraction est configuré pour provoquer une réinitialisation physique du circuit qu'il protège en cas de tentative d'accès à la mémoire de ce circuit. Un dispositif anti-effraction physique est par exemple un détecteur de tentative de fraudes de types tension électrique, température, fréquence et lumière et un blindage actif. En cas d'attaque, le circuit de chiffrement est réinitialisé physiquement. Les données sensibles sont alors effacées de la mémoire. Par un tel dispositif anti-effraction physique, on obtient une protection physique de la clé de chiffrement et de la signature numérique (301) qui sont stockées dans le circuit de chiffrement.

Un signal hyperfréquence modulé, comprenant une sous-porteuse encodant le message, est ensuite généré par un modulateur (120) du dispositif émetteur.

Dans une première étape, le message (310) comprenant la trame de données chiffrée (311), le code d'authentification de message (312) et le nonce aléatoire (313) avec compteur de messages est encodé, en vue de sa transmission, par modulation sur une sous-porteuse du signal hyperfréquence à émettre. Un premier signal encodant le message (310) sur une sous-porteuse est par exemple obtenu au moyen d'un premier modulateur (comprenant par exemple un oscillateur) (121) recevant en entrée le message (310). Une modulation d'amplitude, de fréquence ou de phase peut être utilisée pour encoder cette trame de données chiffrée (311) sur la sous-porteuse. La fréquence de la sous-porteuse peut être choisie de différentes manières. Cette sous-porteuse peut par exemple être avoir une fréquence de l'ordre de quelques 100 kHz tandis que la fréquence du signal hyperfréquence à émettre pour former le lobe hyperfréquence est de l'ordre de quelques GHz.

La trame de données chiffrée (311) peut être encodée sur la sous-porteuse de manière permanente ou de manière périodique ou selon tout schéma temporel adapté. L'intervalle entre deux émissions de la trame de donnée est choisi suffisamment court pour permettre une détection, avec un temps de réaction adapté au cas d'usage visé, d'un changement d'état du dispositif émetteur et/ou une effraction du dispositif émetteur et/ou un clonage du dispositif émetteur.

Le signal hyperfréquence modulé, comprenant la sous-porteuse encodant le message, est ensuite généré à partir du premier signal au moyen d'un deuxième modulateur (comprenant par exemple un oscillateur) (122) du dispositif émetteur. Un émetteur (130) du dispositif émetteur émet le signal hyperfréquence modulé après amplification éventuelle par un ou plusieurs amplificateurs (131).

Le signal hyperfréquence modulé est émis par le dispositif émetteur et reçu par le dispositif récepteur.

Le dispositif récepteur comprend lui-même un circuit de déchiffrement comprenant une clef de déchiffrement (305B) et la signature numérique (301) du dispositif émetteur. La clef de déchiffrement (305B) correspondant à la clef de chiffrement (305A) stockée dans le circuit de chiffrement du dispositif émetteur. En cas de chiffrement symétrique, la clef de déchiffrement (305B) est identique à la clef de chiffrement (305A).

L'algorithme de déchiffrement correspond à celui utilisé pour le chiffrement et est par exemple un chiffrement AES (Advanced Encryption Standard), avec compteur, par exemple de type CCM (Counter with CBC-MAC) ou GCM (Galois/Counter Mode). La longueur des blocs de données et/ou des clefs de déchiffrement pour l'AES est par exemple de 128 bits.

Le signal hyperfréquence modulé comprend la sous-porteuse encodant le message (310), le message comprenant lui-même une trame de données chiffrée (311). Comme décrit plus haut, la trame de données chiffrée (311) résulte d'un chiffrement d'une trame de données initiale (300A) comprenant une signature numérique (301) d'un dispositif émetteur et une information d'état (302) du dispositif émetteur.

Le signal hyperfréquence modulé est si nécessaire amplifié à la réception par un récepteur (230) comprenant un ou plusieurs amplificateurs (231) dans le dispositif récepteur (200).

Le signal hyperfréquence modulé est démodulé par un démodulateur (221) du dispositif récepteur (200) de sorte à générer un signal hyperfréquence démodulé. Le signal hyperfréquence démodulé est analysé pour détecter une éventuelle intrusion dans le faisceau hyperfréquence. Cette analyse peut par exemple être réalisée par un circuit de démodulation (240) adapté pour détecter une détection d'intrusion.

Le message (310) est extrait du signal hyperfréquence démodulé, par exemple au moyen d'un oscillateur (222) appliqué au signal hyperfréquence démodulé. Le message extrait, comprenant la trame de données chiffrée (311), le nonce aléatoire avec compteur de messages (313) et le code d'authentification (312) de message, est transmis à un circuit de déchiffrement (210) du dispositif récepteur. Un contrôle d'intégrité et d'authentification de la trame de données déchiffrée est effectué au moyen du code d'authentification (312) contenu dans le message (310).

La trame de données chiffrée est déchiffrée par le circuit de déchiffrement (210) du dispositif récepteur au moyen de la clef de déchiffrement (305B) pour générer une trame de données déchiffrée (300B). Le circuit de déchiffrement, met en œuvre un algorithme de déchiffrement asymétrique ou symétrique.

Après déchiffrement, l'information d'état contenue dans la trame de donnée déchiffrée est analysée pour déclencher le cas échéant (en cas de défaut technique et/ou d'état d'effraction) une alarme.

Les données de déchiffrement (notamment la clef de déchiffrement (305B) et la signature numérique (301)) peuvent par exemple être stockées de manière sécurisée dans le circuit de déchiffrement, de sorte par exemple à ne pouvoir être lues ou extraites de ce circuit de déchiffrement. Par exemple, le circuit de déchiffrement intègre un dispositif anti-effraction physique. Un dispositif anti-effraction physique est par exemple un détecteur de tentative de fraudes de types tension électrique, température, fréquence et lumière et un blindage actif. En cas d'attaque, le circuit de déchiffrement est réinitialisé physiquement. Les données sensibles sont alors effacées. Par un tel dispositif anti-effraction physique, on obtient une protection physique de la clé de déchiffrement (305B) et de la signature numérique (301) stockées dans le circuit de chiffrement.

Une authentification du dispositif émetteur est effectuée par comparaison de la signature numérique (301) stockée dans le circuit de déchiffrement du dispositif récepteur à la signature numérique présente dans la trame de données déchiffrée (300B).

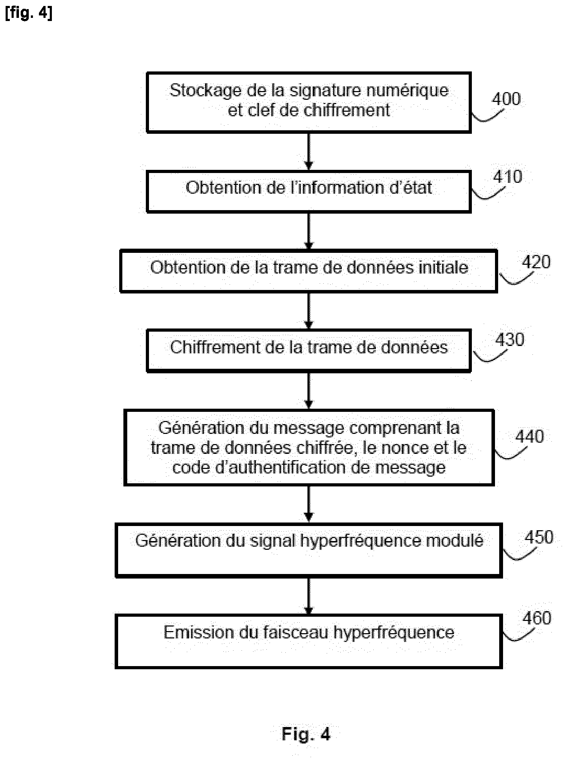

Un exemple de procédé de mise en œuvre d'une barrière hyperfréquence par un dispositif émetteur est décrit par référence à la figure 4. Bien que les étapes soient décrites de manière séquentielle, les étapes peuvent être exécutées dans un ordre différent et/ou en parallèle. Certaines étapes peuvent être répétées ou être omises. Les caractéristiques et aspects du traitement de données décrits dans ce document notamment par référence à la figure 3 sont applicables à la mise en œuvre de ce procédé. Les caractéristiques et aspects du dispositif émetteur décrits dans ce document notamment par référence à la figure 2a sont applicables au dispositif émetteur mettant en œuvre ce procédé.

Lors d'une étape initiale 400, une clef de chiffrement (305A) et une signature numérique (301) sont stockées dans un circuit de chiffrement du dispositif émetteur. Le circuit de chiffrement peut être doté d'un dispositif anti-effraction physique pour empêcher la lecture de ces données.

A l'étape 410, une information d'état (302) du dispositif émetteur est obtenue, par exemple par un processeur embarqué du dispositif émetteur ou directement par le circuit de chiffrement. L'information d'état (302) du dispositif émetteur comprend une information d'état effraction et/ou une information d'état de défaut technique comme déjà décrit dans ce document.

A l'étape 420, une trame de données (300A) comprenant la signature numérique (301) du dispositif émetteur et l'information d'état (302) du dispositif émetteur est générée et/ou obtenue, par exemple par un processeur embarqué du dispositif émetteur ou directement par le circuit de chiffrement du dispositif émetteur.

A l'étape 430, une trame de données (300A) est chiffrée par le circuit de chiffrement du dispositif émetteur au moyen de la clef de chiffrement (305A) de sorte à générer une trame de données chiffrée (311). Le chiffrement utilise par exemple un algorithme de chiffrement AES de type CCM ou GCM comme décrit par ailleurs dans ce document.

A l'étape 440, un signal hyperfréquence est modulé pour générer un signal hyperfréquence modulé comprenant une sous-porteuse encodant un message (310) comprenant la trame de données chiffrée (311) obtenue à l'étape 430. Le message (310) comprend en outre un nonce aléatoire avec compteur de messages (313) utilisé comme donnée d'initialisation lors du chiffrement ainsi qu'un code d'authentification de message fourni en sortie du chiffrement (312) permettant d'effectuer un contrôle d'intégrité et d'authentification de la trame de données déchiffrée.

A l'étape 450, un faisceau hyperfréquence est généré par un émetteur (230) dispositif à partir du signal hyperfréquence modulé, après une éventuelle amplification.

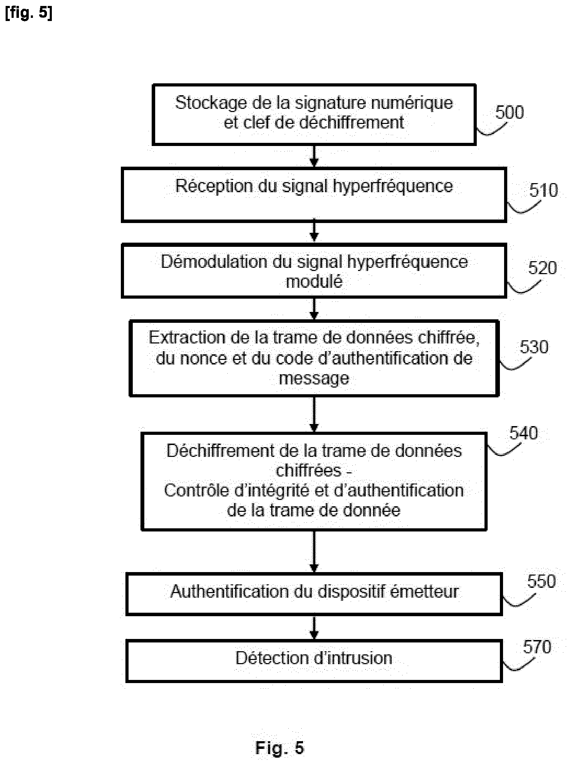

Un exemple de procédé de mise en œuvre d'une barrière hyperfréquence par un dispositif récepteur est décrit par référence à la figure 5. Bien que les étapes soient décrites de manière séquentielle, les étapes peuvent être exécutées dans un ordre différent et/ou en parallèle. Certaines étapes peuvent être répétées ou être omises. Les caractéristiques et aspects du traitement de données décrits dans ce document notamment par référence à la figure 3 sont applicables à la mise en œuvre de ce procédé. Les caractéristiques et aspects du dispositif récepteur décrits dans ce document notamment par référence à la figure 2b sont applicables au dispositif récepteur mettant en œuvre ce procédé.

Lors d'une étape initiale 500, une clef de déchiffrement (305B) et une signature numérique (301) du dispositif émetteur sont stockées dans un circuit de déchiffrement du dispositif récepteur. Le circuit de déchiffrement est doté d'un dispositif anti-effraction physique pour empêcher la lecture de ces données. La clef de déchiffrement correspond à la clef de chiffrement stockée dans le dispositif émetteur coopérant avec le dispositif récepteur pour la mise en œuvre de la barrière hyperfréquence.

A l'étape 510, le dispositif récepteur reçoit un signal hyperfréquence modulé comprenant une sous-porteuse encodant un message (310). Le message (310) comprend une trame de données chiffrée (311), la trame de données chiffrée (311) résultant d'un chiffrement d'une trame de données initiale (300A). La trame de données initiale comprend une signature numérique (301) d'un dispositif émetteur et une information d'état (302) du dispositif émetteur. Le message (310) comprend en outre un nonce aléatoire avec compteur de messages (313) et un code d'authentification de message (312).

A l'étape 520, le signal hyperfréquence modulé est démodulé, après éventuelle amplification, pour générer un signal hyperfréquence démodulé.

A l'étape 530, la trame de données chiffrée (311) est extraite du signal hyperfréquence démodulé.

A l'étape 540, la trame de données chiffrée (311) est déchiffrée par le circuit de déchiffrement du dispositif récepteur au moyen de la clef de déchiffrement stockée dans ce circuit de déchiffrement pour générer une trame de données déchiffrée (300B). Un contrôle d'intégrité et d'authentification de la trame de données déchiffrée (300B) est également effectué durant cette étape par le circuit de déchiffrement du dispositif récepteur au moyen du code d'authentification (301) présent dans le message.

A l'étape 550, une authentification du dispositif émetteur est effectuée par le circuit de déchiffrement du dispositif récepteur à partir de la trame de données déchiffrée (300B) au moyen de la signature numérique (301) stockée dans le circuit de déchiffrement du dispositif récepteur.

A l'étape 570, une analyse du signal hyperfréquence démodulé est effectuée pour détecter une éventuelle intrusion dans le faisceau hyperfréquence à partir du signal hyperfréquence démodulé.

Dans les dispositifs et procédés décrits dans ce document, de par la méthode de chiffrement choisie, la protection anti-rejeux du message (310) est obtenue. La trame de donnée chiffrée et le nonce avec compteur de messages sont uniques à chaque émission. Un émetteur « pirate » ne pourra pas réémettre après recopie la trame « entendue » pour simuler l'émetteur et son lobe hyperfréquence original sans être détecté.

Le faisceau hyperfréquence, également appelé lobe hyperfréquence, par nature utilisé que pour la détection d'intrusion, est ici également utilisé pour transmettre au récepteur de la barrière un message utilisant et intégrant une information d'état et une signature de l'émetteur et ce de manière chiffrée au moyen d'un algorithme de chiffrement permettant à la fois une confidentialité de l'échange, une authentification de l'émetteur et une protection anti-rejeux. Le faisceau hyperfréquence de détection d'intrusion est ainsi marqué et unique et doté d'une fonction nouvelle.

Grâce à l'utilisation d'un tel faisceau hyperfréquence de détection d'intrusion comme liaison de transmission d'information, l'état du dispositif émetteur et la signature de l'émetteur sont transmis de l'émetteur au récepteur de la barrière hyperfréquence sans autre moyen de communication que le faisceau hyperfréquence lui-même.

Tout procédé d'enrôlement et d'appairage sécurisé entre le dispositif émetteur et le dispositif récepteur peut être utilisé. Par exemple un enrôlement est réalisé en usine pour la génération et l'enregistrement de la signature numérique (301) et de la clef de chiffrement (305A) dans le circuit de chiffrement du dispositif récepteur, tout comme dans le dispositif émetteur. Le dispositif récepteur et le dispositif émetteur sont ainsi appariés de manière unique et sûre au travers de la clef de chiffrement (305A) et de la signature numérique (301). L'appairage des dispositifs émetteurs et récepteurs est quasiment certain, par exemple à 2^128 chances près, lorsqu'on utilise une signature numérique ou une clef numérique (301) codée sur 128 octets.

La protection contre le clonage du dispositif émetteur est obtenue grâce à la cyber sécurisation du lobe hyperfréquence émis :
- confidentialité des informations d'état et de la signature numérique (301) qui sont transmis par message par le dispositif émetteur au dispositif récepteur ;
- authentification et anti-répudiation du dispositif émetteur (possession clé et signature numérique (301)) ;
- intégrité du contenu du message (310) transmis et de la signature numérique (301) ;
- clef de chiffrement (305A) unique ;
- signature numérique (301) unique ;
- protection anti-rejeux ;

Toute anomalie à la réception de la trame chiffrée, comme par exemple une non authentification, une non intégrité ou une non reconnaissance de la signature, est détectée par le circuit de déchiffrement. Ce dernier génère alors une alarme « clonage émetteur » à un dispositif de supervision. Si le nonce a perdu son intégrité (différent de celui émis), le déchiffrement ne se fait pas et une erreur est générée par le déchiffrement.

En outre, la solution décrite utilise un chiffrement et déchiffrement standards (AES type CCM ou GCM) et conformes aux recommandations ANSSI (Agence Nationale de la Sécurité des Systèmes d'Information) et NIST (National Institute of Standards and Technology).

De surcroît, une diminution du coût de l'installation est obtenue (plus particulièrement du câblage aujourd'hui utilisé) par utilisation du lobe hyperfréquence de détection pour la transmission vers le dispositif récepteur des informations d'état. Une diminution de la consommation d'énergie des dispositifs récepteurs et émetteurs est obtenue qui permet de prévoir une alimentation autonome des dispositifs récepteurs et émetteurs, par exemple via l'énergie solaire ou autre.

## Revendications

1. Dispositif émetteur (100) configuré pour la mise en œuvre d'une barrière hyperfréquence, le dispositif émetteur comprenant
- un circuit de chiffrement (110) configuré pour : stocker une clef de chiffrement (305A) et un identifiant numérique unique (301) du dispositif émetteur ; obtenir une trame de données (300A) comprenant l'identifiant numérique unique (301) du dispositif émetteur et une information d'état (302) du dispositif émetteur ; et chiffrer la trame de données (300A) au moyen de la clef de chiffrement (305A) pour générer une trame de données chiffrée (311) unique à chaque émission par application d'un algorithme de chiffrement utilisant un nonce ;
- un modulateur (120) configuré pour moduler un signal hyperfréquence afin de générer un signal hyperfréquence modulé comprenant une sous-porteuse encodant un message (310) comprenant la trame de données chiffrée (311) et le nonce, le message (310) comprenant un code d'authentification de message (312) utilisé par un dispositif récepteur pour effectuer un contrôle d'intégrité
et d'authentification de la trame de données déchiffrée;
- un émetteur (130) configuré pour générer à partir du signal hyperfréquence modulé un faisceau hyperfréquence de détection d'intrusion .

2. Dispositif émetteur selon la revendication 1, dans lequel l'algorithme de chiffrement Advanced Encryption Standard, AES, en mode « Counter with CBC-MAC », CCM, ou « Galois/Counter Mode », GCM, dont le nonce intègre un compteur de message.

3. Dispositif émetteur selon l'une quelconque des revendications 1 à 2, dans lequel le circuit de chiffrement est doté d'un dispositif anti-effraction physique.

4. Dispositif émetteur selon l'une quelconque des revendications 1 à 3, dans lequel l'information d'état (302) du dispositif émetteur comprend une information d'état effraction et/ou une information d'état de défaut technique.

5. Dispositif récepteur (200) configuré pour la mise en oeuvre d'une barrière hyperfréquence, le dispositif récepteur comprenant
- un récepteur (230) configuré pour recevoir un signal hyperfréquence modulé de détection d'intrusion et comprenant une sous-porteuse encodant un message (310) comprenant une trame de données chiffrée (311) unique à chaque émission et un nonce, le message (310) comprend un code d'authentification de message (312), la trame de données chiffrée (311) résultant d'un chiffrement d'une trame de données initiale (300A) au moyen d'un algorithme de chiffrement utilisant le nonce, la trame de données initiale comprenant un identifiant numérique unique (301) d'un dispositif émetteur et une information d'état (302) du dispositif émetteur;
- un démodulateur (220) configuré pour démoduler le signal hyperfréquence modulé de sorte à générer un signal hyperfréquence démodulé et extraire la trame de données chiffrée (311) du signal hyperfréquence démodulé;
- un circuit de détection (240) configuré pour détecter une éventuelle intrusion dans le faisceau hyperfréquence par analyse du signal hyperfréquence démodulé ;
- un circuit de déchiffrement (210) configuré pour stocker une clef de déchiffrement et un identifiant numérique unique (301) du dispositif émetteur ; déchiffrer la trame de données chiffrée (311) au moyen de la clef de déchiffrement pour générer une trame de données déchiffrée (300B) ; effectuer un contrôle d'intégrité et d'authentification de la trame de données déchiffrée au moyen du code d'authentification de message (312) ; authentifier le dispositif émetteur à partir de la trame de données déchiffrée (300B) et de l'identifiant numérique unique (301) stockée dans le circuit de déchiffrement du dispositif récepteur.

6. Dispositif récepteur selon la revendication 5, dans lequel le déchiffrement utilise un algorithme de déchiffrement Advanced Encryption Standard, AES, en mode « Counter with CBC-MAC », CCM, ou « Galois/Counter Mode », GCM, dont le nonce intègre un compteur de messages.

7. Dispositif récepteur selon l'une quelconque des revendications 5 à 6, dans lequel le circuit de déchiffrement est doté d'un dispositif anti-effraction physique.

8. Procédé de mise en oeuvre d'une barrière hyperfréquence par un dispositif émetteur, le procédé comprenant
- un stockage (400) d'une clef de chiffrement (305A) et d'un identifiant numérique unique (301) du dispositif émetteur dans un circuit de chiffrement du dispositif émetteur ;
- une obtention (420) d'une trame de données (300A) comprenant l'identifiant numérique unique (301) du dispositif émetteur et une information d'état (302) du dispositif émetteur ;
- un chiffrement (430) de la trame de données (300A) au moyen de la clef de chiffrement (305A) pour générer une trame de données chiffrée (311) unique à chaque émission par application d'un algorithme de chiffrement utilisant un nonce ;
- une modulation (450) d'un signal hyperfréquence pour générer un signal hyperfréquence modulé comprenant une sous-porteuse encodant un message (310) comprenant la trame de données chiffrée (311) et le nonce, le message (310) comprenant un code d'authentification de message (312) utilisé par un dispositif récepteur pour effectuer un contrôle d'intégrité et d'authentification de la trame de données déchiffrée;
- une génération (460) à partir du signal hyperfréquence modulé d'un faisceau hyperfréquence de détection d'intrusion.

9. Procédé de mise en œuvre d'une barrière hyperfréquence par un dispositif récepteur, le procédé comprenant
- un stockage (500), dans un circuit de déchiffrement du dispositif récepteur, d'une clef de déchiffrement (305B) et un identifiant numérique unique (301) d'un dispositif émetteur;
- une réception (510) d'un signal hyperfréquence modulé de détection d'intrusion et comprenant une sous-porteuse encodant un message (310) comprenant une trame de données chiffrée (311) unique à chaque émission et un nonce, le message (310) comprenant un code d'authentification de message (312), la trame de données chiffrée (311) résultant d'un chiffrement d'une trame de données initiale (300A) numérique au moyen d'un algorithme de chiffrement utilisant le nonce, la trame de données initiale (300A) comprenant un identifiant numérique unique (301) du dispositif émetteur et une information d'état (302) du dispositif émetteur ;
- une démodulation (520) du signal hyperfréquence modulé pour générer un signal hyperfréquence démodulé ;
- une extraction (530) de la trame de données chiffrée (311) du signal hyperfréquence démodulé ;
- un déchiffrement (540) de la trame de données chiffrée (311) au moyen de la clef de déchiffrement pour générer une trame de données déchiffrée (300B) ;
- un contrôle d'intégrité et d'authentification (540) par le circuit de déchiffrement (210) de la trame de données déchiffrée au moyen du code d'authentification de message (312) ;
- une authentification (550) du dispositif émetteur à partir de la trame de données déchiffrée (300B) et de l'identifiant numérique unique (301) stocké dans le circuit de déchiffrement du dispositif récepteur ; et
- une analyse (570) du signal hyperfréquence démodulé pour détecter une éventuelle intrusion dans le faisceau hyperfréquence à partir du signal hyperfréquence démodulé.

## Patentansprüche

1. Sendevorrichtung (100), die zum Implementieren einer Mikrowellenschranke konfiguriert ist, wobei die Sendevorrichtung umfasst:
- eine Verschlüsselungsschaltung (110), die konfiguriert ist zum: Speichern eines Verschlüsselungsschlüssels (305A) und einer eindeutigen digitalen Kennung (301) der Sendevorrichtung; Erhalten eines Datenframes (300A), der die eindeutige digitale Kennung (301) der Sendevorrichtung und eine Statusinformation (302) der Sendevorrichtung umfasst; und Verschlüsseln des Datenframes (300A) unter Verwendung des Verschlüsselungsschlüssels (305A), um einen verschlüsselten Datenframe (311) zu generieren, der für jede Übertragung eindeutig ist, indem ein Verschlüsselungsalgorithmus unter Verwendung einer Nonce angewendet wird;
- einen Modulator (120), der konfiguriert ist, um ein Mikrowellensignal zu modulieren, um ein moduliertes Mikrowellensignal zu erzeugen, das einen Unterträger umfasst, der eine Nachricht (310) codiert, die den verschlüsselten Datenframe (311) und die Nonce umfasst, wobei die Nachricht (310) einen Nachrichtenauthentifizierungscode umfasst ( 312), der von einer Empfangsvorrichtung verwendet wird, um eine Integritäts- und Authentifizierungsprüfung des entschlüsselten Datenframes durchzuführen;
- einen Sender (130), der konfiguriert ist, um aus dem modulierten Mikrowellensignal einen Mikrowellenstrahl zur Einbruchserkennung zu erzeugen.

2. Sendevorrichtung nach Anspruch 1, wobei der Verschlüsselungsalgorithmus Advanced Encryption Standard, AES, im Modus "Counter with CBC-MAC", CCM, oder "Galois/Counter Mode", GCM, dessen Nonce einen Nachrichtenzähler beinhaltet.

3. Sendevorrichtung nach einem der Ansprüche 1 bis 2, wobei die Verschlüsselungsschaltung mit einer Vorrichtung gegen physische Manipulation versehen ist.

4. Sendevorrichtung nach einem der Ansprüche 1 bis 3, wobei die Statusinformation (302) der Sendevorrichtung eine Statusinformation über physische Manipulation und/oder eine Statusinformation über technische Fehler umfasst.

5. Empfangsvorrichtung (200), die zum Implementieren einer Mikrowellenschranke konfiguriert ist, wobei die Empfangsvorrichtung umfasst:
- einen Empfänger (230), der zum Empfangen eines modulierten Einbruchserkennungs-Mikrowellensignals konfiguriert ist und einen Unterträger umfasst, der eine Nachricht (310) codiert, die einen verschlüsselten Datenframe (311), der für jede Übertragung eindeutig ist, und eine Nonce umfasst, wobei die Nachricht (310) einen Nachrichtenauthentifizierungscode umfasst (312), wobei sich der verschlüsselte Datenframe (311) aus einer Verschlüsselung eines initialen Datenframes (300A) mittels eines Verschlüsselungsalgorithmus unter Verwendung der Nonce ergibt, wobei der initiale Datenframe eine eindeutige digitale Kennung (301) einer Sendevorrichtung und eine Statusinformation (302) der Sendevorrichtung umfasst;
- einen Demodulator (220), der konfiguriert ist, um das modulierte Mikrowellensignal so zu demodulieren, dass ein demoduliertes Mikrowellensignal erzeugt und der verschlüsselte Datenframe (311) aus dem demodulierten Mikrowellensignal extrahiert wird;
- eine Detektionsschaltung (240), die konfiguriert ist, um ein mögliches Eindringen in den Mikrowellenstrahl durch Analysieren des demodulierten Mikrowellensignals zu detektieren;
- eine Entschlüsselungsschaltung (210), die konfiguriert ist zum: Speichern eines Entschlüsselungsschlüssel und einer eindeutigen digitalen Kennung (301) der Sendevorrichtung; Entschlüsseln des verschlüsselten Datenframes (311) unter Verwendung des Entschlüsselungsschlüssels, um einen entschlüsselten Datenframe (300B) zu generieren; Durchführen einer Integritäts- und Authentifizierungsprüfung des entschlüsselten Datenframes unter Verwendung des Nachrichtenauthentifizierungscodes (312); Authentifizieren der Sendevorrichtung anhand des entschlüsselten Datenframes (300B) und der eindeutigen digitalen Kennung (301), die in der Entschlüsselungsschaltung der Empfangsvorrichtung gespeichert ist.

6. Empfangsvorrichtung nach Anspruch 5, wobei die Entschlüsselung einen Entschlüsselungsalgorithmus Advanced Encryption Standard, AES, im Modus "Counter with CBC-MAC", CCM, oder "Galois/Counter Mode", GCM, dessen Nonce einen Nachrichtenzähler beinhaltet, nutzt.

7. Empfangsvorrichtung nach einem der Ansprüche 5 bis 6, wobei die Entschlüsselungsschaltung mit einer Vorrichtung gegen physische Manipulation versehen ist.

8. Verfahren zum Implementieren einer Mikrowellenschranke durch eine Sendevorrichtung, wobei das Verfahren umfasst:
- Speichern (400) eines Verschlüsselungsschlüssels (305A) und einer eindeutigen digitalen Kennung (301) der Sendevorrichtung in einer Verschlüsselungsschaltung der Sendevorrichtung;
- Erhalten (420) eines Datenframes (300A), der eine eindeutige digitale Kennung (301) der Sendevorrichtung und eine Statusinformation (302) der Sendevorrichtung umfasst;
- Verschlüsseln (430) des Datenframes (300A) unter Verwendung des Verschlüsselungsschlüssels (305A), um einen verschlüsselten Datenframe (311) zu generieren, der für jede Übertragung eindeutig ist, durch Anwendung eines Verschlüsselungsalgorithmus unter Verwendung einer Nonce;
- Modulieren (450) eines Mikrowellensignals, um ein moduliertes Mikrowellensignal zu erzeugen, das einen Unterträger umfasst, der eine Nachricht (310) codiert, die den verschlüsselten Datenframe (311) und die Nonce umfasst, wobei die Nachricht (310) einen Nachrichtenauthentifizierungscode (312) umfasst, der von einer Empfangsvorrichtung zum Durchführen einer Integritäts- und Authentifizierungsprüfung des entschlüsselten Datenframes verwendet wird;
- Erzeugen (460) eines Einbruchserkennungs-Mikrowellenstrahls aus dem modulierten Mikrowellensignal.

9. Verfahren zum Implementieren einer Mikrowellenschranke durch eine Empfangsvorrichtung, wobei das Verfahren umfasst:
- Speichern (500) eines Entschlüsselungsschlüssels (305B) und einer eindeutigen digitalen Kennung (301) einer Sendevorrichtung in einer Entschlüsselungsschaltung der Empfangsvorrichtung;
- Empfangen (510) eines modulierten Einbruchserkennungs-Mikrowellensignals und umfassend einen Unterträger, der eine Nachricht (310) codiert, die einen verschlüsselten Datenframe (311), der für jede Übertragung eindeutig ist, und eine Nonce umfasst, wobei die Nachricht (310) einen Nachrichtenauthentifizierungscode umfasst (312), wobei sich der verschlüsselte Datenframe (311) aus einer Verschlüsselung eines digitalen initialen Datenframes (300A) mittels eines Verschlüsselungsalgorithmus unter Verwendung der Nonce ergibt, wobei der initiale Datenframe (300A) eine eindeutige digitale Kennung (301) der Sendevorrichtung und eine Statusinformation (302) der Sendevorrichtung umfasst;
- Demodulieren (520) des modulierten Mikrowellensignals, um ein demoduliertes Mikrowellensignal zu erzeugen;
- Extrahieren (530) des verschlüsselten Datenframes (311) aus dem demodulierten Mikrowellensignal;
- Entschlüsseln (540) des verschlüsselten Datenframes (311) unter Verwendung des Entschlüsselungsschlüssels, um einen entschlüsselten Datenframe (300B) zu generieren;
- eine Integritäts- und Authentifizierungsprüfung (540) des entschlüsselten Datenframes durch die Entschlüsselungsschaltung (210) mittels des Nachrichtenauthentifizierungscodes (312);
- Authentifizieren (550) der Sendevorrichtung anhand des entschlüsselten Datenframes (300B) und der eindeutigen digitalen Kennung (301), die in der Entschlüsselungsschaltung der Empfangsvorrichtung gespeichert ist; und
- Analysieren (570) des demodulierten Mikrowellensignals, um ein mögliches Eindringen in den Mikrowellenstrahl aus dem demodulierten Mikrowellensignal zu detektieren.

## Claims

1. A transmitter device (100) configured to implement a microwave barrier, the transmitter device comprising
- an encryption circuit (110) configured to: store an encryption key (305A) and a unique digital identifier (301) of the transmitter device; obtain a data frame (300A) comprising the unique digital identifier (301) of the transmitter device and status information (302) of the transmitter device; and encrypt the data frame (300A) using the encryption key (305A) to generate an encrypted data frame (311) unique to each transmission by applying an encryption algorithm using a nonce;
- a modulator (120) configured to modulate a microwave signal to generate a modulated microwave signal comprising a subcarrier encoding a message (310) comprising the encrypted data frame (311) and the nonce, the message (310) comprising a message authentication code (312) used by a receiver device to perform an integrity and authentication check of the decrypted data frame;
- a transmitter (130) configured to generate an intrusion detection microwave beam from the modulated microwave signal.

2. The transmitter device according to claim 1, wherein the encryption algorithm is the Advanced Encryption Standard, AES, in "Counter with CBC-MAC", CCM, or "Galois/Counter Mode", GCM, mode, the nonce of which incorporates a message counter.

3. The transmitter device according to any one of claims 1 to 2, wherein the encryption circuit has a physical anti-intrusion device.

4. The transmitter device according to any one of claims 1 to 3, wherein the status information (302) of the transmitter device comprises intrusion status information and/or technical fault status information.

5. A receiver device (200) configured to implement a microwave barrier, the transmitter device comprising
- a receiver (230) configured to receive a modulated microwave intrusion detection signal and comprising a subcarrier encoding a message (310) comprising an encrypted data frame (311) unique to each transmission and a nonce, the message (310) comprises a message authentication code (312), the encrypted data frame (311) resulting from an encryption of an initial data frame (300A) by means of an encryption algorithm using the nonce, the initial data frame comprising a unique digital identifier (301) of a transmitter device and status information (302) of the transmitter device;
- a demodulator (220) configured to demodulate the modulated microwave signal so as to generate a demodulated microwave signal and extract the encrypted data frame (311) from the demodulated microwave signal;
- a detection circuit (240) configured to detect a possible intrusion in the microwave beam by analysis of the demodulated microwave signal;
- a decryption circuit (210) configured to store a decryption key and a unique digital identifier (301) of the transmitter device; decrypt the encrypted data frame (311) using the decryption key to generate a decrypted data frame (300B); perform an integrity and authentication check of the decrypted data frame using the message authentication code (312); authenticate the transmitter device from the decrypted data frame (300B) and unique digital identifier (301) stored in the decryption circuit of the receiver device.

6. The receiver device according to claim 5, wherein the decryption uses the decryption algorithm Advanced Encryption Standard, AES, in "Counter with CBC-MAC", CCM, or "Galois/Counter Mode", GCM, mode, the nonce of which incorporates a message counter.

7. The receiver device according to any one of claims 5 to 6, wherein the decryption circuit has a physical anti-intrusion device.

8. A method for operating a microwave barrier by a transmitter device, the method comprising
- storing (400) an encryption key (305A) and a unique digital identifier (301) of the transmitter device in an encryption circuit of the transmitter device;
- obtaining (420) a data frame (300A) comprising the unique digital identifier (301) of the transmitter device and status information (302) of the transmitter device;
- encrypting (430) the data frame (300A) using the encryption key (305A) to generate a unique encrypted data frame (311) at each transmission by applying an encryption algorithm using a nonce;
- modulating (450) a microwave signal to generate a modulated microwave signal comprising a subcarrier encoding a message (310) comprising the encrypted data frame (311) and the nonce, the message (310) comprising a message authentication code (312) used by a receiver device to perform an integrity and authentication check of the decrypted data frame;
- generating (460) from the modulated microwave signal an intrusion detection microwave beam.

9. A method for operating a microwave barrier by a receiver device, the method comprising
- storing (500), in a decryption circuit of the receiver device, a decryption key (305B) and a unique digital identifier (301) of a transmitter device;
- receiving (510) a modulated microwave intrusion detection signal and comprising a subcarrier encoding a message (310) comprising an encrypted data frame (311) unique to each transmission and a nonce, the message (310) comprising a message authentication code (312), the encrypted data frame (311) resulting from an encryption of an initial data frame (300A) by means of an encryption algorithm using the nonce, the initial data frame (300A) comprising a unique digital identifier (301) of the transmitter device and status information (302) of the transmitter device;
- demodulating (520) the modulated microwave signal to generate a demodulated microwave signal;
- extracting (530) the encrypted data frame (311) from the demodulated microwave signal;
- decrypting (540) the encrypted data frame (311) using the decryption key to generate a decrypted data frame (300B);
- performing an integrity and authentication check (540) by the decryption circuit (210) of the decrypted data frame using the message authentication code (312);
- authenticating (550) the transmitter device based on the decrypted data frame (300B) and the unique digital identifier (301) stored in the decryption circuit of the receiver device; and
- analyzing (570) the demodulated microwave signal to detect a possible intrusion into the microwave beam based on the demodulated microwave signal.
